# EUROPEAN PATENT APPLICATION

(11) **EP 1 312 402 A1**
(43) Date of publication of application: **21.05.2003**
(21) Application number: 02255872.0
(22) Date of filing: 22.08.2002
(51) Int. Cl.: A63F 13/12

(54) **Digital video receiver that generates background pictures and sounds for games**

(30) Priority: 24.08.2001 US 939377; 16.04.2002 US 123792
(71) Applicant: Nokia Communication OY, 02150 Espoo (FI)
(72) Inventor: Rajamaki, Jani, 20880 Turku (FI); Wahlroos, Esa, 20810 Turku (FI)
(74) Representative: Read, Matthew Charles

(57) **Abstract**

Methods and systems are provided for customizing a digital broadcast receiver. Video and audio clips may be captured from a broadcast signal after receiving commands from a user. Live and captured video and audio clips may then be used to provide background images and sounds while a user plays a video game.

## Description

This application is a continuation-in-part of Application No. 09/939,377, filed August 24, 2001.

### BACKGROUND OF THE INVENTION

### FIELD OF THE INVENTION

The invention relates to data transmission. More particularly, the invention relates to systems and methods for customizing the operation and user interface elements of digital broadcast receivers.

### DESCRIPTION OF RELATED ART

It is common today for audio and visual programs to be broadcasted in digital formats such as DVB-S, DVB-C and DVB-T. The broadcasted signals are typically received at digital broadcast receivers (set-top boxes) and converted to television signals for transmission to televisions. Prior art digital broadcast receivers have standard operations and generate relatively standard user interface screens that users cannot customize.

Existing digital broadcast receivers have not taken advantage of the ease with which digital signals can be captured, stored, manipulated and retrieved. As a result, users have been limited in their ability to customize the operation of digital broadcast receivers. For example, when tuned to an audio channel on a conventional digital broadcast receiver, users sometimes view a blank screen or an alphanumeric description of the audio broadcast Users have also been limited in their ability to customize user interface elements and background video and sound.

Therefore, there is a need in the art for digital broadcast receiver systems and methods that allow users to customize the operation of digital broadcast receivers. There is also a need in the art for digital broadcast receiver systems and methods that allow users to manipulate the data received at the receiver to customize the operation of receiver.

### BRIEF SUMMARY OF THE INVENTION

The above-mentioned needs in the art are satisfied by the disclosed systems and methods that allow users to customize digital broadcast receivers by capturing and utilizing video and audio clips. Live or captured video and/or audio clips may be played back in the background while a user plays a video game.

In a first embodiment of the invention, a method of generating a background video for a video game is provided. The method includes receiving at a digital broadcast receiver a broadcast signal including video data and displaying on a display screen the video data. A video game video is displayed on the display screen such that the video game video overlays the video data.

In another embodiment of the invention, a method of generating a background video for a video game is provided. The method includes receiving a broadcast signal including video data and converting the broadcast signal to a television input signal. The television input signal is transmitted to a television and a first user-generated capture command is received. In response to the capture command, a segment of the television input signal is stored in a non-volatile memory. The segment of the television input signal is displayed on a display device and a video game video is displayed on the display device such that the video game video overlays the displayed television input signal.

In yet another embodiment of the invention, a method of generating background sound for a video game is provided. The method includes receiving at a digital broadcast receiver a signal including audio data. The method also includes simultaneously generating at an audio/video device sound corresponding to the audio data and displaying a video game on a display of the audio/video device.

In still another embodiment of the invention, a digital broadcast rccciver is provided. The digital broadcast receiver includes a central processing unit and a memory module coupled to the central processing unit and containing computer-executable instructions that causes the receiver to perform the steps of: (a) receiving a broadcast signal including video data; (b) displaying on a display screen the video data; and (c) displaying on the display screen video game video such that the video game video overlays the video data.

In other embodiments of the invention, computer-executable instructions for implementing the disclosed methods are stored on computer- readable media.

### BRIEF DESCRIPTION OF THE DRAWINGS

The present invention is illustrated by way of example and not limited in the accompanying figures in which like reference numerals indicate similar elements and in which:
Fig. 1 shows a system that includes a digital broadcast receiver in accordance with an embodiment of the invention.
Fig. 2 illustrates a method of capturing and utilizing picture frames in accordance with an embodiment of the invention.
Fig. 3 illustrates a system that includes a digital broadcast receiver, television and stereo system in accordance with an embodiment of the invention.
Fig. 3a illustrates a terminal display screen that includes navigation bars in accordance with an embodiment of the invention.
Fig. 4 illustrates a puzzle game method in accordance with an embodiment of the invention.
Fig. 5 shows a picture frame that is used in a puzzle game in accordance with an embodiment of the invention.
Fig. 6 shows a puzzle picture frame in accordance with an embodiment of the invention.
Fig. 7 illustrates an embodiment in which a video game video overlays a background video.
Fig, 8 illustrates a user interface screen that may be presented to a user in accordance with an embodiment of the invention.
Fig. 9 illustrates a menu selection bar that may be presented to a user in accordance with an embodiment of the invention.
Fig. 10 illustrates a method of assigning audio clips to receiver events in accordance with an embodiment of the invention.

### DETAILED DESCRIPTION OF THE INVENTION

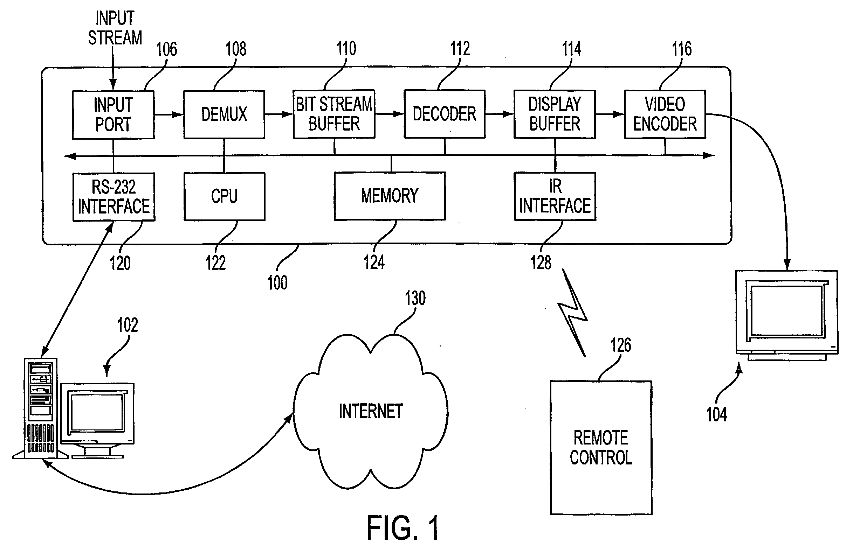

Fig. 1 shows a system for receiving and processing digital video signals in accordance with an embodiment of the invention. A digital broadcast receiver 100 may be coupled to a computer device 102 and to a television 104. Digital broadcast receiver 100 may be implemented with a set-top box, mobile terminal or other audio/visual device. In alternative embodiments, television 104 may be replaced with a terminal, such as one attached to a telephone, personal digital assistant, pager or other device. A digital input stream is received at the input port 106. The digital input stream may have a format such as DVB-S, DVB-C, DVB-T, MPEG-1, MPEG-2 or ISO-IEC standards 11172-1, 11172-2 and 11172-3. The digital input stream may also use a format disclosed by the Bluetooth Special Interest Group. Video and audio programs may be transmitted to digital broadcast receiver 100 over a variety of different frequencies and/or in multiplexed manner over a single carrier. A demultiplexer 108 may be included to isolate a desired audio or video program from the input stream. The isolated program may then be sent to a bit stream buffer 110. Bit stream buffer 110 buffers data that is sent to a decoder 112. Decoder 112 may be included to decode or descramble signals broadcast in a compressed format such as in an MPEG-1 or MPEG-2 format. In one embodiment, the output of decoder 112 is a baseband signal. The baseband signal leaving decoder 112 may then be transmitted to display buffer 114 before being transmitted to a video encoder 116. Video encoder 116 may then convert the baseband signal to a format that can be used by a television, such as the National Television Standards Committee (NTSC) standard or the Phase Alternating Line (PAL) standard.

Digital broadcast receiver 100 may also include an interface 120 for coupling the receiver to computer device 102 or other devices. An RS-232 interface may be utilized to provide a standard interface for connecting to additional devices. Of course, other interfaces, such as USB or IEEE 1394 interfaces may also be used. A central processing unit (CPU) 122 is included to control the overall operation of digital broadcast receiver 100. Computer executable instructions and data used by CPU 122 and other components within digital broadcast receiver 100 are stored in a memory 124. Memory 124 may be implemented with any combination of read only memory modules or random access memory modules.

A user may control the operation of digital broadcast receiver 100 with a remote control 126. A conventional infrared (IR) interface 128 may be included to receive information from remote control 126.

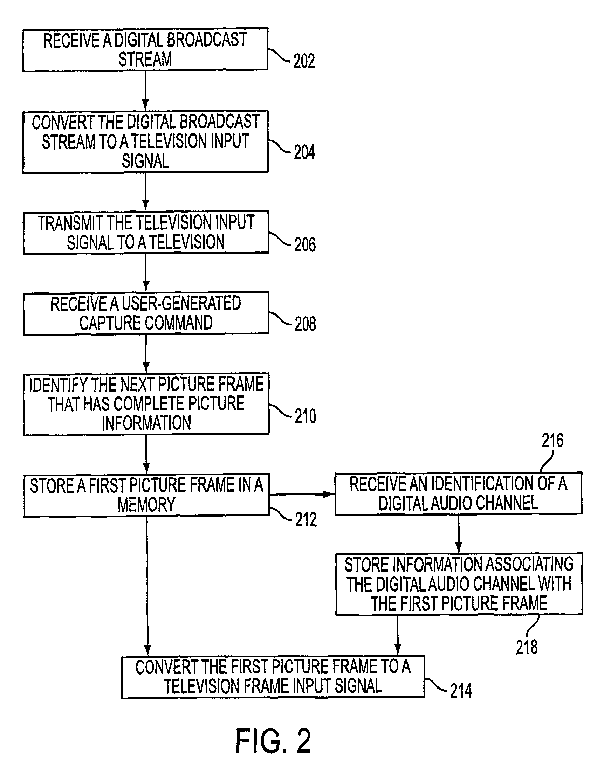

A method for customizing the operation of the digital broadcast receiver in accordance with an embodiment of the invention is shown in Fig. 2. In particular, Fig. 2 illustrates a method for generating a background image for a television, computer monitor or other device. First, in step 202, a digital video stream is received at a digital broadcast receiver. The digital video stream may be received from a cable television provider, satellite television provider or other source of digital video and/or audio programming. Next, in step 204 the digital video stream is converted to a television input signal. The conversion may include transforming an MPEG-2 or other digital signal into an NTSC or PAL signal. Such conversion circuits and software are well-known to those skilled in the art.

The television input signal is then transmitted to a television or other devices in step 206. While viewing the television program, the user may see a picture that the user would like to store as a background screen for the television or other device (e.g., computer device). The user may make a selection with remote control 126 or on an interface of digital broadcast receiver 100 to select the picture. After receiving a capture command in step 208, the digital video stream is monitored and the next picture frame that has complete picture information is identified in step 210. The capture command may come from a mobile phone terminal, computer terminal, remote control or other device. When the digital video stream is in MPEG format, the stream contains I, P and B picture frames. In one variation, only the I picture frames form complete pictures that can be used as background images. P and B frames contain only a portion of the information needed to form a complete image. Step 210 may include monitoring the digital video stream to identify the next I picture frame and may be performed by decoder 112.

After a proper picture frame is identified, in step 212 the picture frame is stored in a memory, such as memory 124. The memory may be a non-volatile or, alternatively, a volatile memory. The picture frame may be retrieved from memory 124 and transmitted to display buffer 114 or video encoder 116 to be displayed on television 104 or a computer monitor through a computer interface. Video encoder 116 may convert the picture frame to a television frame input signal in step 214. The picture frame may be displayed on a television at times determined by the user. In one embodiment, the picture frame is displayed on the television while the user listens to audio programming. As shown in figure 2, in step 216, digital broadcast receiver 100 may receive the identification of a digital audio channel. This step may be performed by the user making an appropriate selection with remote control 126. Then in step 218, information associating the digital audio channel with the picture frame may be stored in a memory, such as memory 124. The association may be in the form of computer-executable instructions causing the picture frame to be retrieved from the memory when digital broadcast receiver 100 is tuned to the audio channel. In one embodiment, the user may view prompts on a television screen instructing the user to enter information to make the association.

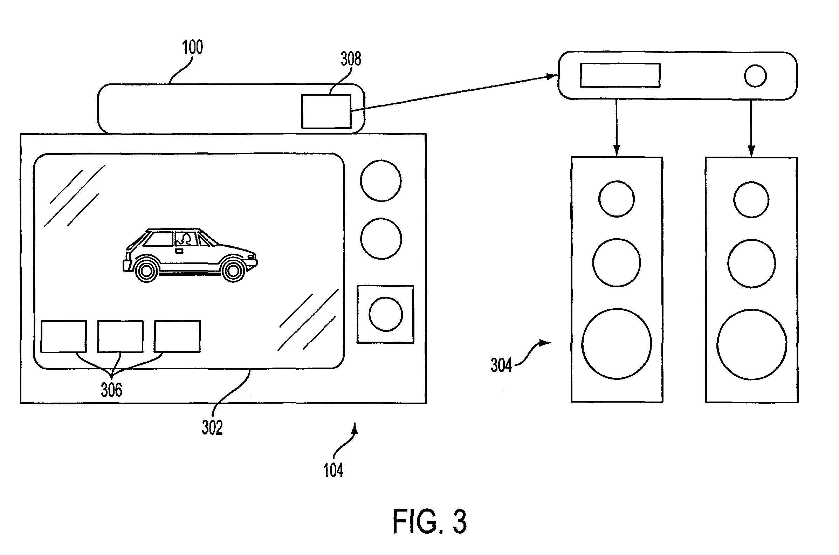

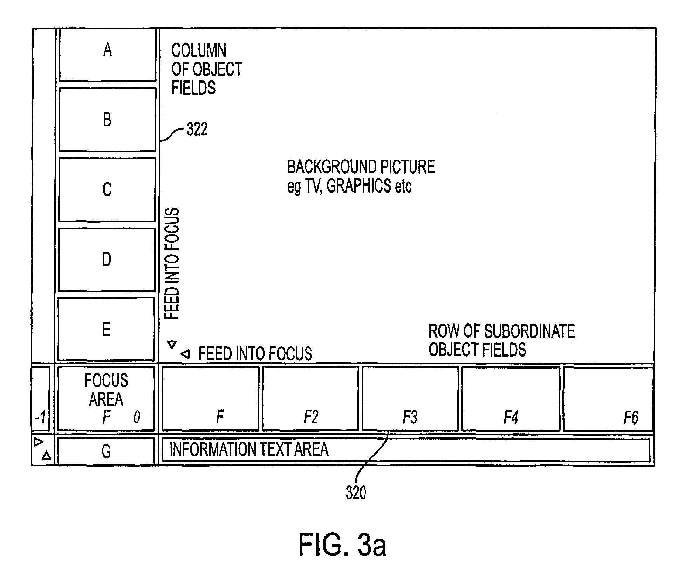

Fig. 3 also shows a series of application selection items 306- In one embodiment, the application selection items are icons formed by reducing the size of picture frames. Fig. 3a shows an embodiment in which application selection items are arranged in a column 320 and a row 322 as part of navigation bars. The application selection items or icons may be linked to computer executable instructions or data files in a conventional manner.

One skilled in the art will appreciate that the present invention is not limited to the use of a single picture frame. In one embodiment, the user may select a plurality of picture frames and the picture frames may be transmitted to television 104 in a predetermined or random order. The picture frames may then be displayed on television 104 during different time periods. Fig. 3 illustrates an embodiment in which a background image 302 is displayed on television 104. Digital broadcast receiver 100 transmits audio signals to a stereo system 304 via an audio output interface 308 while transmitting background images to television 104. While listening to stereo system 304, the user may view one, two or a series of background images on television 104 at the same time or during different time periods. In one embodiment, audio data may be captured from MPEG data streams in the manner described above.

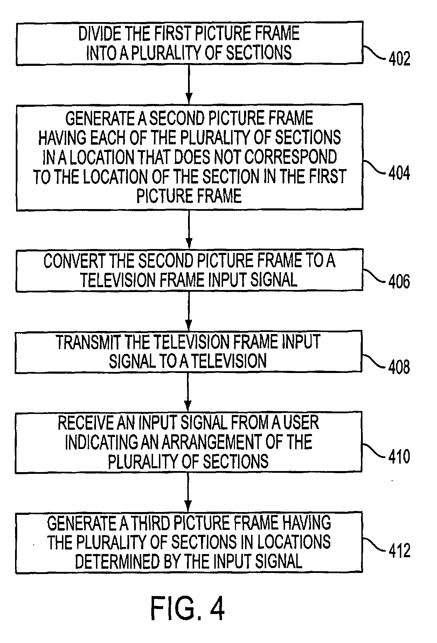

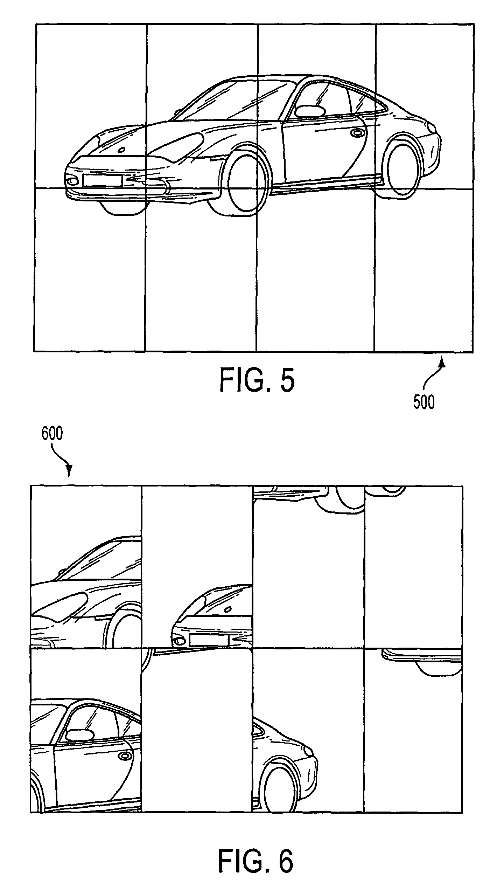

Digital broadcast receiver 100 may include computer executable instructions that allow users to manipulate images and participate in a variety of different games and exercises. Fig. 4 illustrates a method that may be performed by a digital broadcast receiver to generate a puzzle game. A picture frame may be chosen by the user, or alternatively, chosen by the receiver. In step 402, a captured picture frame is divided into a plurality of sections. Fig. 5 shows a picture frame 500 divided into a plurality of sections. While the sections shown in Fig. 5 are all the same size, in other embodiments, the sections may have different sizes and shapes. Furthermore, in still further embodiments, the user may select a complexity level. The size and shapes of the puzzle pieces may be a function of the complexity level. The division of the picture frame into a plurality of sections is well within the skill of a practitioner in the art. In one embodiment, memory 124 may include computer-executable instructions for assigning sections of the picture frame corresponding to predetermined ranges of pixels to sections. For example, in an embodiment with six sections, each section may be 240 * 192 pixels. CPU 122 may be programmed to identify the sections of the input stream that correspond to the pixel sections shown on television 104. Other games are described in GB 0113218.2, filed on 5/31/01, the entire disclosure of which is incorporated by reference. Short range wireless communication systems, such as those that use an LPRF link, may be utilized to download games and content to the digital broadcast receiver.

In step 404, a second picture frame is generated. The second picture frame may include the plurality of sections from the first picture frame placed in different locations. Fig. 6 shows a picture frame 600 having the plurality of sections from Fig. 5 placed in a random order. When the user decides to play the puzzle game, the second picture frame may be converted to a television frame input signal in step 406. Step 406 may be performed by retrieving the second picture frame from memory 124 and transmitting the second picture frame to video encoder 116. The television frame input signal may then be transmitted to a television in step 408 so that the user can view the puzzle.

Next, in step 410, an input signal is received from the user indicating an arrangement of the plurality of sections. The arrangement may be the user's attempt to solve the puzzle. There are number of different ways in which the user can provide such information. For example, each section in figure 6 may be assigned a number and the user may identify a current section and the sections the user wishes to move that section to.

Finally, in step 412, a third picture frame having the plurality of sections in locations determined by the user may be generated. The third picture frame may be generated after each section is rearranged or after the user has determined new locations for each of the sections the user wishes to move. CPU 122 may be programmed to rearrange sections of the second picture frame to generate the third picture frame.

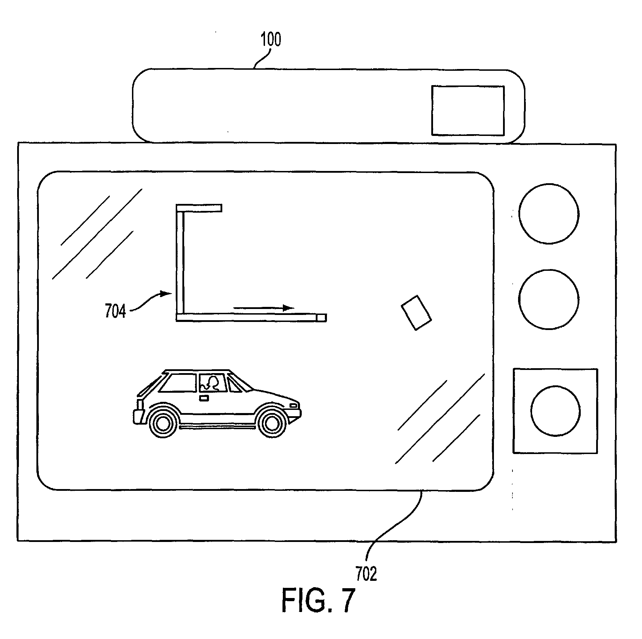

In other embodiments of the invention, audio and or video may be captured and played back while a user plays a video game. Fig. 7 shows an embodiment in which a background video 702 is played back with an overlying video game video 704. Video game video 704 may correspond to a "snake" game or any other video game. In one embodiment, video game video 704 has priority over background video 702. Whenever there is a conflict, video game video 704 replaces background video 702 for a set of pixels. In other embodiments, video game video 704 may have a higher brightness level than background video 702. Background video 702 may also be displayed in black and white and video game video 704 may be displayed in color. One skilled in the art will appreciate that there are numerous different ways to emphasize or prioritize video game video 704. The embodiment shown in Fig. 7 allows a user to watch a video or listen to audio while playing a video game.

Background video 702 and/or audio may be captured using one or more of the methods described above. In particular, while watching a program, a user may enter a selection with remote control 126 or an interface on digital broadcast receiver 100 to select a video and/or audio segment The video and/or audio segment may correspond to an entire program, track or a portion thereof. In alternative embodiments, background video 702, may be displayed in real time, i.e., as soon as a corresponding signal is received and processed. Background video and/or audio may also be retrieved from a storage device, such as a DVD, videotape, CD, audiotape or non-volatile memory.

Overlaying a video game over a background video allows a user to easily pay more attention to one video while not loosing track of another video. A user may desire to play a video game, for example, during commercials. Overlaying the video game over the background video also allows the user to play the video while keeping track of the status of the commercial, which corresponds to the background video. Digital broadcast receiver 100 may be configured to freeze the status of a video game on command from a user so that a user may resume playing the video game during another commercial.

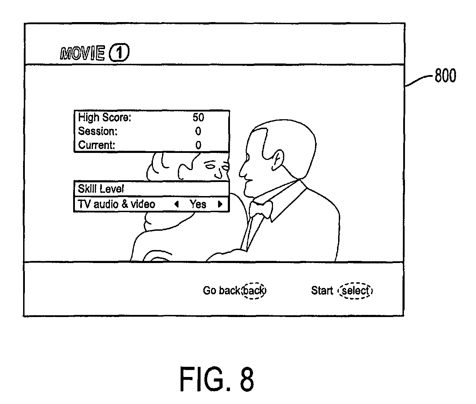

The background video way make the game more interesting and impact the difficulty of the video game. The user may also be given the option of pausing or freezing the background video. A pause or freeze button may be included on remote control 126. Fig. 8 shows a user interface screen 800 that may be displayed to a user before, during or after playing a video game. One skilled in the will appreciate that the user may be presented with numerous options that may include game type, skill level, duration and location and size of the video game video.

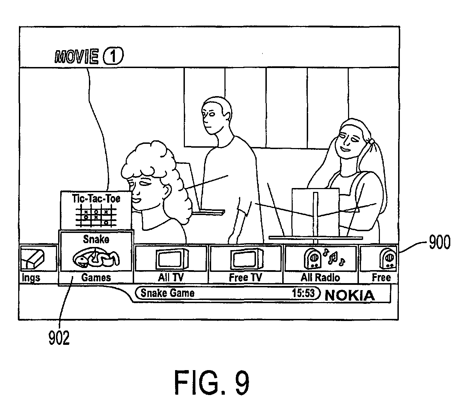

Fig. 9 illustrates a menu selection bar 900 that may be presented to a user. Menu selection bar 900 includes a menu option 902 that allows the user to choose between two games. Of course, menu selection bar 900 and menu option 902 may present a variety of options to the user.

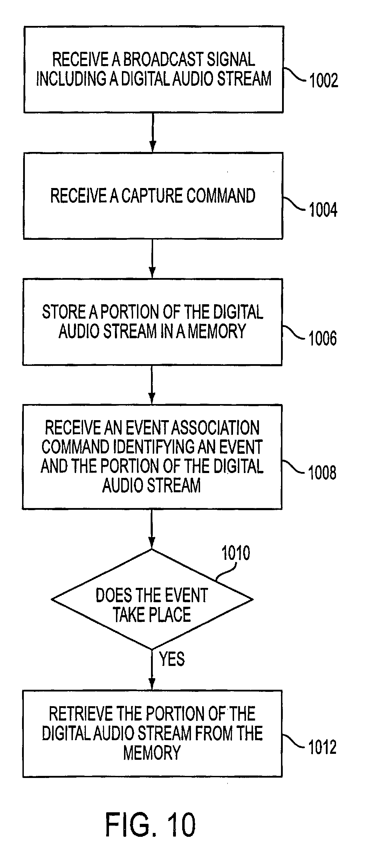

As shown in Fig. 3, the present invention may be used with digital audio signals as well as digital video signals. Fig. 10 illustrates an embodiment for customizing a digital broadcast receiver by assigning audio clips to different receiver events. In step 1002, the digital broadcast receiver receives a broadcast signal including a digital audio stream. The digital audio stream may be part of a digital video stream, may be part of an audio channel transmitted by the same service provider providing the digital video stream or may be delivered in any other manner. While listening to an audio program, the user may desire to capture a section of the audio stream. In step 1004, the digital broadcast receiver 100 receives a capture command from the user. The user may transmit the capture command with remote control 126, enter the command on an interface attached to digital broadcast receiver 100 or enter the command in another manner that indicates that the user desires to capture a section of audio stream. In one embodiment, the capture command can include selecting a button on remote control 126 followed by a time period. For example, if the user desires to capture the previous five seconds of an audio stream, the user may select an audio capture button (not shown) on remote control 126 followed by the number 5.

A portion of the digital audio stream may then be stored in the memory in step 1006. Bit stream buffer 110 or display buffer 114 may include hardware and/or computer-executable instructions for storing audio and/or visual bit streams for a period of time after corresponding signals are transmitted to television 104, stereo system 304 or other devices. The appropriate section of the buffered data may then be retrieved from bit stream buffer 110 or display buffer 114 after receiving a capture command and the data may be stored in a memory.

After capturing a section of a digital audio stream, the user may then assign the captured digital audio stream to a receiver event in step 1008. Events may include the start up of digital broadcast receiver 100, the selection of one of the icons 306 (shown in Fig. 3) and a time of day. For example, receiver 100 may be programmed to play an audio clip at a predetermined time of day. Icons 306 may form part of a navigation bar and the selection of a navigation bar may also be an event.

After one of the events takes place in step 1010, the corresponding portion of the digital audio stream may be retrieved from a memory in step 712 and may then be transmitted to a device such as television 104 or stereo system 304. For example, during the start up of digital audio receiver 100, the audio clip identified by the user may be transmitted to television 104 or stereo system 304.

In other embodiments of the invention, computer device 102 may be used to transmit audio and video data to digital broadcast receiver 100. Computer device 102 may be connected to a wide area network such as the Internet 130 to obtain icons, background images and audio and video clips. Computer device 102 and/or digital broadcast receiver 100 may also be connected to other input devices, such as scanners, cameras and MP3 players. Video and audio data may also be transferred from digital broadcast receiver 100 to computer device 102. Computer device 102 may use the video and audio data to customize user interface screens, backgrounds, screen savers add sound to computer device events or otherwise customize the computer device. Computer device 102 may also convert the video and audio data to other formats and transmit the data to other entities connected to the Internet 130 (e.g., as attachments to e-mail messages).

While the invention has been described with respect to specific examples, those skilled in the art will appreciate that there are numerous variations and permutations of the above described systems and techniques that fall within the spirit and scope of the invention as set forth in the appended claims. For example, one or more of the components shown within digital broadcast receiver 100 may be located within one or more other devices, such as a television or stereo receiver- Moreover, the disclosed methods may be implemented as computer-executable instructions recorded on a computer readable medium such as a floppy disk or CD-ROM.

## Claims

1. A method of generating a background video for a video game, the method comprising:
(a) receiving at a digital broadcast receiver a broadcast signal including video data;
(b) displaying on a display screen the video data; and
(c) displaying on the display screen video game video such that the video game video overlays the video data.

2. The method of claim 1, wherein the video data is displayed black and white and the video game video is displayed in color.

3. The method of claim 1, wherein the video data is displayed with a higher brightness than the video game video.

4. The method of claim 1, wherein the video data is live video.

5. The method of claim 1, further including retrieving the video data from a video storage device.

6. The method of claim 5, wherein the video storage device comprises a non-volatile memory.

7. The method of claim 1, wherein (b) comprises displaying on a display screen of a mobile terminal the video data.

8. The method of claim 1, wherein (b) comprises displaying on a display screen of a television monitor the video data.

9. The method of claim 1, wherein the broadcast signal includes audio data (b) comprises displaying on a display screen the video data and generating sound corresponding to the audio data.

10. A method of generating a background video for a video game, the method comprising:
(a) receiving a broadcast signal including video data;
(b) converting the broadcast signal to a television input signal;
(c) transmitting the television input signal to a television;
(d) receiving a first user-generated capture command;
(e) in response to (d), storing a segment of the television input signal into a non-volatile memory;
(f) displaying on a display device the segment of the television input signal; and
(g) displaying on the display device a video game video such that the video game video overlays the displayed television input signal.

11. A method of generating background sound for a video game, the method comprising:
(a) receiving at a digital broadcast receiver a signal including audio data;
(b) generating at an audio/video device sound corresponding to the audio data; and
(c) simultaneously with (b), displaying on a display of the audio/video device a video game.

12. The method of claim 11, further including
(i) receiving a user-generated capture command;
(ii) in response to (i), storing a portion of the audio data in a memory.

13. The method of claim 11, wherein (b) comprises generating in real time at the audio/video device sound corresponding to the audio data.

14. The method of claim 11, wherein the audio/visual device comprises a mobile terminal.

15. The method of claim 11, wherein the audio/visual device comprises a television monitor.

16. A computer-readable medium having computer-executable instructions for causing a digital broadcast receiver to perform the steps of:
(a) receiving a broadcast signal including video data;
(b) displaying on a display screen the video data; and
(c) displaying on the display screen video game video such that the video game video overlays the video data.

17. A computer-readable medium having computer-executable instructions for causing a digital broadcast receiver to perform the steps of:
(a) receiving a broadcast signal including video data;
(b) converting the broadcast signal to a television input signal;
(c) transmitting the television input signal to a television;
(d) receiving a first user-generated capture command;
(e) in response to (d), storing a segment of the television input signal into a non-volatile memory;
(f) displaying on a display device the segment of the television input signal; and
(g) displaying on the display device a video game video such that the video game video overlays the displayed television input signal.

18. A digital broadcast receiver comprising:
a central processing unit;
a memory module coupled to the central processing unit and containing computer-executable instructions that causes the receiver to perform the steps of:
(a) receiving a broadcast signal including video data;
(b) displaying on a display screen the video data; and
(c) displaying on the display screen video game video such that the video game video overlays the video data.

19. A digital broadcast receiver comprising:
a means for receiving a broadcast signal including video data;
a means for displaying the video data; and
a means for displaying a video game video such that the video game video overlays the video data
